# EUROPÄISCHE PATENTSCHRIFT

(11) **EP 0 628 707 B1**
(45) Veröffentlichungstag und Bekanntmachung des Hinweises auf die Patenterteilung: **26.06.1996**
(21) Anmeldenummer: 94104460.4
(22) Anmeldetag: 22.03.1994
(51) Int. Cl.: F02B 27/02

(54) **Luftansaugsystem einer Brennkraftmaschine**
System for the air supply of an internal combustion engine
Système d'admission d'air d'un moteur à combustion interne

(30) Priorität: 07.05.1993 DE 4315129
(43) Veröffentlichungstag der Anmeldung: 14.12.1994
(73) Patentinhaber: Dr.Ing.h.c. F. Porsche Aktiengesellschaft, D-70435 Stuttgart (DE)
(72) Erfinder: Rutschmann, Erwin, Dipl.-Ing., D-75233 Tiefenbronn (DE)

(56) Entgegenhaltungen:
- EP-A- 0 115 153
- EP-A- 0 158 008
- EP-A- 0 167 794
- DE-A- 3 820 674
- H.P.LENZ 'Gemischbildung bei Ottomotoren' 1990 , SPRINGER , WIEN AT
- PATENT ABSTRACTS OF JAPAN vol. 8, no. 216 (M-329) (1653) 3. Dezember 1984 & JP-A-59 101 535 (YAMAHA HATSUDOKI K.K.) 12. Juni 1984
- RESEARCH DISCLOSURE, Nr.267, Juli 1986, EMSWORTH, HAMPSHIRE GB Seiten 428 - 430 'Engine Intake Tuning'
- H.P.LENZ 'Gemischbildung bei Ottomotoren' 1990 , SPRINGER , WIEN AT Kapital 5, Absatz 5.2.5 "Variable Sauganlagen"
- PATENT ABSTRACTS OF JAPAN vol. 8, no. 216 (M-329) (1653) 3. Dezember 1984 & JP-A-59 101 535

## Beschreibung

Die Erfindung betrifft ein Luftansaugsystem einer mehrzylindrigen Brennkraftmaschine gemäß dem Oberbegriff des Patentanspruches 1.

Die Leistung einer Brennkraftmaschine ist direkt proportional zu dem Produkt aus ihrem Hubvolumen und dem Mitteldruck. Soll eine bezüglich Abgasmenge und Kraftstoffverbrauch ungünstige Vergrößerung des Hubvolur ens vermieden werden, so bleibt zur Leistungssteigerung eine gezielte Erhöhung des Mitteldruckes. Hierdurch steigt auch das Drehmoment der Brennkraftmaschine, da sich dieses direkt aus dem oben genannten Produkt ergibt.

Aus der DE-34 24 433 A1 ist ein gattungsgemäßes Luftans ugsystem mit zwei Resonanzbehältern bekannt. Diese sind untereinander mit zwei absperrbaren Resonanzrohren verbunden, in welches die zugeführte Frischluft einströmt. Von den Resonanzbehältern aus führen Einzelsaugrohre zu Einlaßkanälen der Zylinderköpfe. In Abhängigkeit des durch Drosselklappen gesteuerten Verbindungsquerschnittes der Behälter läßt sich der Mitteldruck und damit das Drehmoment in einem weiten Drehzahlbereich steigern.

Aus H.P. Lenz "Gemischbildung bei Otto-Motoren" 1990, Springer, Wien AT, Kap. 5, Absatz 5.2.5 "Variable Sauganlagen", Seiten 353 bis 358 ist weiterhin ein Luftansaugsystem bekannt, bei dem ein Zusatzbehälter vorgesehen ist, der etwa mittig zwischen jeweils zwei Schwingrohrhälften angeordnet ist, die zum einen mit dem Zylinderkopf und zum anderen mit einem Luftverteiler verbunden sind. Innerhalb der mit dem Lufverteiler verbundenen Schwingrohrhälften sind verschiebbare Rohrstücke (Schaltelemente) vorgesehen, durch die der Zusatzbehälter von den Schwingrohren entkoppelbar ist. Die verschiebbaren Rohrelemente sind daz in der einen Schwingrohrhälfte geführt und durchdringen den Zusatzbehälter in dessen abgekoppelten Zustand und liegen am Mündungsbereich der gegenüberliegenden Schwingrohrhälfte an.

Der Erfindung liegt die Aufgabe zugrunde, ein gattungsgen ißes Luftansaugsystem dahingehend zu verbessern, daß der Mitteldruck möglichst m gesamten Drehzahlbereich der Brennkraftmaschine gesteigert wird.

Die Lösung dieser Aufgabe gelingt mit den Merkmalen des Patentanspruches 1.
Vorteilhafte Ausgestaltungen der Erfindung sind in den abhängigen Ansprüchen benannt.

Wenn bei einer Brennkraftmaschine zusätzlich zu dem aus den Resonanzbehältern und dem Verbindungsrohr gebildeten Zweikammer-Resonanzsystem abschnittsweise in den Resonanzbehältern verlaufende, den Saugrohren zugeordnete Saugrohrverlängerungen angeordnet sind, welche an einen gemeinsamen, mit einem Frischlufteintritt versehenen Behälter angeschlossen sind, so ergänzt dieses aus dem Behälter und den als Schwingrohre wirkenden Saugrohrverlängerungen gebildete Einkammer-Schwingrohrsystem das Resonanzsystem dahingehend, daß der Liefergrad steigt. Das bedeutet, daß jedem Zylinder eine vergrößerte Frischluftmenge zugeführt wird, wodurch der Mitteldruck steigt.

In vorteilhafter Ausgestaltung weist auch das Verbindungsrohr einen Frischlufteintritt auf, wodurch der Mitteldruck weiter erhöht wird.

Die beiden Frischlufteintritte können vorteilhaft in einer gemeinsamen Eintrittsöffnung des Behälters zusammengefaßt werden. Diese kann endseitig des Behälters angeordnet sein, der sich in Längsrichtung der Zylinderreihen etwa mittig zwischen den Resonanzbehältern erstreckt. Das Verbindungsrohr ist dabei geteilt ausgeführt, wobei sich die Teilstücke von den Resonanzbehältern bis zu dem mittigen Behälter erstrecken. Diese Anordnung ermöglicht durch die mittige Einströmung und den direkten Anschluß des Verbindungsrohres und der Saugrohrverlängerung an den die Frischluft verteilenden Behälter eine verlustarme, gleichmäßige Strömung.

In einer Variante der Erfindung weist mindestens eine Saugrohrverlängerung jeder Zylinderreihe eine als Absperrorgan wirkende Drosselklappe auf. Hierbei wirkt das Luftansaugsystem als reines Resonanzsystem, wobei diese Saugrohrverlängerungen als schaltbare, zusätzliche Resonanzrohre wirken.

Den Mitteldruck weiter erhöhende, die Strömungs- und Schwingungsverhältnisse optimierende Merkmale sind durch eine zueinander fluchtende Anordnung der zylindrisch ausgebildeten, in den Resonanzbehältern liegenden Abschnitte der Saugrohrverlängerung gegeben. Diese weisen dabei einen bestimmten Abstand zu den Einströmtrichtern der Saugrohre auf.

Eine weitere Optimierung kann durch eine Anordnung von Schiebemuffen auf den zylindrischen Abschnitten erzielt werden, wobei der Abstand zu den Einströmtrichern wahlweise überbrückbar ist. Hierdurch ist der Aufladeeffekt dieses Luftansaugsystems in einem weiten Drehzahlbereich dadurch verbessert, daß in einem niedrigen bis mittleren Drehzahlbereich die Schiebemuffen den durch den Abstand definierten Ringspalt verschließen und das Zweikammer-Resonanzsystem abkoppeln. Dadurch ist nur das Einkammersystem geschaltet, wobei die Saugrohrlänge um den Betrag der Saugrohrverlängerung vergrößert und das Gesamtvolumen des Systems verkleinert ist. Durch Öffnen des Ringspaltes bei höheren Drehzahlen ist das Resonanzsystem zugeschaltet, wobei die Saugrohrlänge verkürzt und das Gesamtvolumen verkleinert ist.

Zur weiteren Verbesserung der Resonanzeigenschaften kann parallel zum Verbindungsrohr ein solches zweites zwischen den Resonanzbehältern angeordnet sein. Zur drehzahloptimalen Zuschaltung der Verbindungsrohre können diese mit drehzahlabhängig zu betätigenden Absperrorganen versehen sein.

Die Erfindung wird nachfolgend beispielhaft anhand einer schematischen Zeichnung erläutert.

Es zeigen:
- Fig. 1: eine teilweise geschnittene Seitenansicht einer ersten Variante der Erfindung mit einer Modifikation in der linken Hälfte,

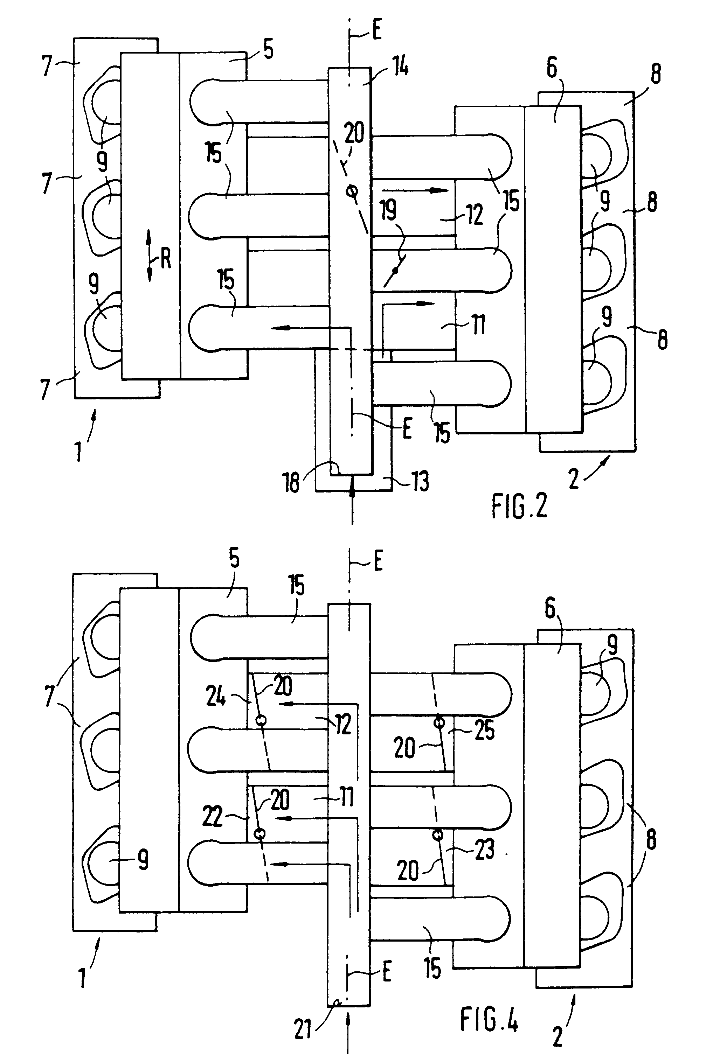

- Fig. 2: eine Draufsicht in Richtung des Pfeiles X gemäß Fig. 1
- Fig. 3: eine teilweise geschnittene Seitenansicht einer zweiten Variante mit einer Modifikation in der linken Hälfte und
- Fig. 4: eine Draufsicht in Richtung des Pfeiles Y gemäß Fig. 3

Eine Brennkraftmaschine mit zwei Zylinderreihen 1, 2 weist ein Luftansaugsystem, bestehend aus einem Zweikammer-Resonanzsystem 3 und einem Einkammer-Schwingrohrsystem 4 auf.
Das Resonanzsystem 3 umfaßt den Zylinderreihen 1, 2 zugeordnete Resonanzbehälter 5, 6, an welche einzelne, zu den Zylindern 7, 8 der Brennkraftmaschine führende Saugrohre 9 mittels Einströmtrichtern 10 angeschlossen sind.

Weiterhin umfaßt es zwei an die Resonanzbehälter 5, 6 angeschlossene Verbindungsrohre 11, 12, wobei einem Verbindungsrohr 11 über einen Frischlufteintritt 13 Luft zugeführt wird.

Etwa mittig zwischen den Resonanzbehältern 5, 6 in einer Symmetrieebene E-E liegend ist ein Behälter 14 angeordnet, der sich in seiner größten Ausdehnung entlang einer Längsrichtung R der Zylinderreihen 1, 2 erstreckt.
An diesen Behälter 14 sind beiderseits Saugrohrverlängerungen 15 angeschlossen, welche mit zylindrischen Abschnitten 16 versehen sind, die innerhalb der Resonanzbehälter 5, 6 verlaufen.
Die Saugrohrverlängerungen 15 bilden gemeinsam mit dem Behälter 14 das Einkammer-Schwingrohrsystem 4.
Die Abschnitte 16 sind beabstandet und koaxial fluchtend zu den Einströmtrichtern 10 angeordnet. Der dabei entstehende Abstand H definiert einen Ringspalt 17.

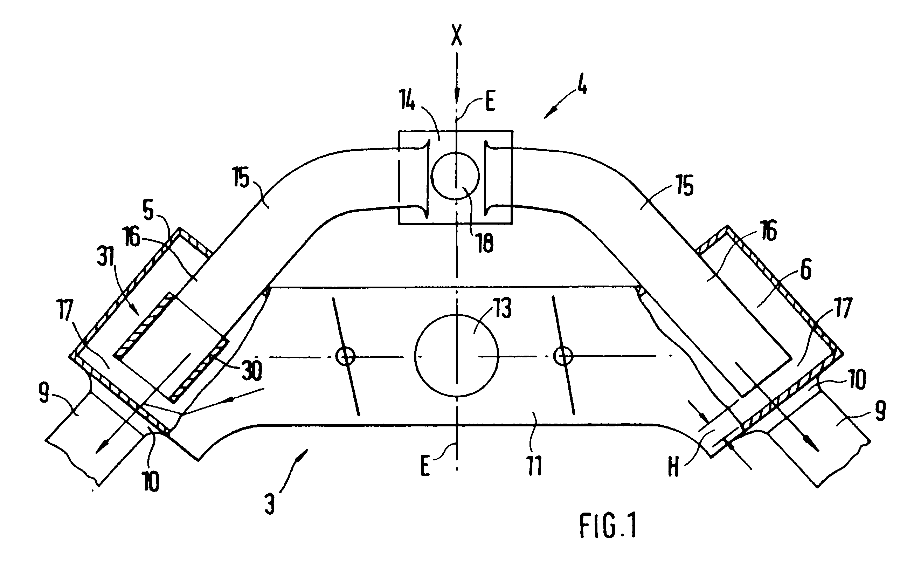

Gemäß Fig. 1, von der zunächst nur der rechts der Ebene E-E liegende Teil relevant ist, zeigt eine erste Variante. Der Behälter 14 weist einen Frischlufteintritt 18 auf. Durch diesen und den weiteren Frischlufteintritt 13 strömt angesaugte Luft in das System. Über den Ringspalt 17 gelangt sowohl Luft durch die als Resonanzrohre wirkenden Verbindungsrohre 11, 12 als auch über die als Schwingrohre wirkenden Saugrohrverlängerungen 15 zu den Zylindern 7, 8.

Die mittlere der Saugrohrverlängerungen 15 weist eine steuerbare Drosselklappe 19 auf. Diese Saugrohrverlängerung 15 wirkt als zusätzliches Resonanzrohr bei bestimmten Drehzahlen und trägt somit zur Erhöhung des Drehmomentes bei.

Zur weiteren, gezielten Zuschaltung des zweiten Verbindungsrohres 12 weist dieses eine steuerbare Drosselklappe 20 auf.

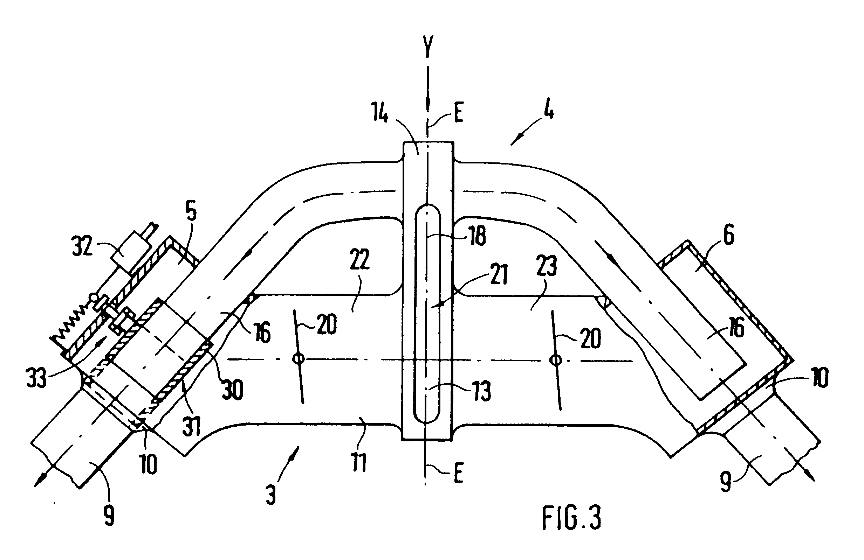

In einer zweiten Variante der Erfindung gemäß Fig. 3 sind der erste und der weitere Frischlufteintritt 13 und 18 gemeinsam in einer Eintrittsöffnung 21 des Behälters 14 angeordnet, der sich scheibenförmig in der Ebene E-E erstreckt.
Die Verbindungsrohre 11, 12 sind geteilt ausgeführt, wobei sich jedes Teilrohrstück 22, 23, 24, 25 zwischen einem Resonanzbehälter 5, 6 und dem Behälter 14 erstreckt und jeweils eine steuerbare Drosselklappe 20 aufweist.

In der jeweils links von der Symmetrieebene liegenden Darstellung gemäß der Figuren 1 und 3 ist eine Modifikation der jeweiligen Variante dargestellt, welche eine auf dem Abschnitt 16 gleitverschieblich gelagerte Schiebemuffe 30 aufweist. Ein Verstellmechanismus ist nur in Figur 3 gezeigt.
Die in einem Resonanzbehälter 5, 6 angeordneten Schiebemuffen 30 sind jeweils zu einer Baueinheit 31 zusammengefaßt, die in an sich bekannter und daher nicht näher beschriebener Weise mittels eines als pneumatischer Druckdose 32 ausgebildeten Stellgliedes und einem Gestänge 33 den Ringspalt 17 überbrückend verschiebbar sind.

Bei relativ niedrigen Drehzahlen wird ein hohes Drehmoment durch lange Saugrohre und ein relativ kleines Gesamtvolumen des Luftansaugsystems erzielt. Zu diesem Zweck stellt die Druckdose 32 in diesem Betriebsbereich der Brennkraftmaschine die Baueinheit 31 in die gemäß Figur 3 gestrichelt gezeichnete, den Ringspalt 17 verschließende Position. Angesaugte Frischluft gelangt nun bei abgekoppelten Resonanzbehältern 5, 6 ausschließlich über den Frischlufteintritt 18 und die zugeschalteten Saugrohrverlängerungen 15 in die Saugrohre 9.

Ab Erreichen eines mittleren Drehzahlbereiches stellt die Druckdose 32 die Baueinheit 31 in die in den Figuren 1 und 3 mit ausgezogenen Linien dargestellte Position der Schiebemuffen 30. Angesaugte Frischluft gelangt hierbei unter Zwischenschaltung der Resonanzbehälter 5, 6 sowohl über die stufenweise zuschaltbaren Verbindungsrohre 11, 12 als auch über die Abschnitte 16 zu dem Ringspalt 17.

## Patentansprüche

1. Luftansaugsystem einer mehrzylindrigen, zweireihigen Brennkraftmaschine, wobei die Zylinder einer Reihe jeweils mit Saugrohre an einen dieser Reihe zugeordneten Resonanzbehälter angeschlossen sind, und mit mindestens einem Verbindungsrohr zwischen den Resonanzbehältern, welches mit einem Frischlufteintritt (13) verbunden ist, dadurch gekenn eichnet, daß das System den Saugrchren (9) zugeordnete, abschnittsweise in erhalb der Resonanzbehälter (5, 6) verlaufende Saugrohrverlängerungen (15) aufweist, welche an einen gemeinsamen, mit einem weiteren F ischlufteintritt (18) versehenen Behälter (14) angeschlossen sind.

2. System nach Anspruch 1, **dadurch gekennzeichnet,** daß der erste und der weitere Frischlufteintritt (18 und 13) gemeinsam in einer Eintrittsöffnung (21) des Behälters (14) angeordnet sind.

3. System nach Anspruch 1 oder 2, **dadurch gekenzeichnet,** daß mindestens eine Saugrohrverlängerung (15) jeder Zylinderreihe (1, 2) ein Absperrorgan (19) aufweist.

4. System nach Anspruch 1 oder 2, **dadurch gekennzeichnet,** daß die innerhalb der Resonanzbehälter (5, 6) liegenden Abschnitte (16) der Saugrohrverlängerung (15) zylindrisch und fluchtend zu den Einströmtrichtern (10) der Saugrohre (9) liegend ausgebildet und einen Abstand (H) belassend angeordnet sind.

5. System nach Anspruch 4, **dadurch gekennzeichnet**, daß auf den Abschnitten (16) verschiebbare, den Abstand (H) wahlweise überbrückende Schiebemuffen (30) angeordnet sind.

6. System nach Anspruch 2, **dadurch gekennzeichnet,** daß der Behälter (14) sich in Längsrichtung (R) der Zylinderreihen (1, 2 erstreckend etwa mittig zwischen den Resonanzbehältern (5, 6) angeordnet ist und das Verbindungsrohr (11) geteilt ausgeführt an den Behälter (14) angeschlossen ist, welcher endseitig die Eintrittsöffnung (18) aufweist.

7. System nach Anspruch 6, **dadurch gekennzeichnet,** daß parallel zu dem ersten Verbindungsrohr (11) verlaufend ein zweit s Verbindungsrohr (12) zwischen den Resonanzbehältern (5, 6) verlaufend angeordnet ist und mindestens eines dieser Rohre (11, 12) mindestens ein Absperrorgan aufweist.

8. System nach Anspruch 5, **dadurch gekennzeichnet,** daß die Schiebemuffen (30) jedes Resonanzbehälters (5, 6) zu einer Baueinheit (31) zusammengefaßt sind, welche von einem an der Resonanzbehälter (5, 6) angeordneten Stellglied verschoben wird.

## Claims

1. An air-intake system of a multiple-cylinder two-row internal-combustion engine, the cylinders of one row each being connected by low-pressure tubes to a respective resonance container associated with the said row, and with at least one connecting tube between the resonance containers which is connected to a fresh-air inlet (13), **characterized in that** the system comprises intake-tube extensions (15) associated with the low-pressure tubes (9) and extending in part inside the resonance containers (5, 6) and connected tc a common container (14) provided with a further fresh-air inlet (18).

2. A system according to Claim 1, **characterized in that** the first and the further fresh-air inlet (18 and 13) are arranged jointly in an inlet opening (21) in the container (14).

3. A system according to Claim 1 or 2, **characterized in that** at least one intake-tube extension (15) of each cylinder row (1, 2) comprises a shut-off device (19).

4. A system according to Claim 1 or 2, **characterized in that** the portions (16) of the intake-tube extensions (15) situated inside the resonance containers (5, 6) are cylindrical and are in alignment with the inflow funnels (10 of the low-pressure tubes (9) and are spaced therefrom by a distance (H).

5. A system according to Claim 4, **characterized in that** sliding sleeves (30) displaceable on the portions (16) and optionally bridging the distance H) are provided.

6. A system according to Claim 2, characterized in that the container (14) is arranged extending in the longitudinal direction (R) of the cylinder rows (1, 2) substantially centrally between the resonance containers (5, 6), and the connecting tube (11) is divided and is connected to the container (14) provided at the end with the inlet opening (18).

7. A system according to Claim 6, **characterized in that** second connecting tube (12) extending parallel to the first connecting tube (11) is arranged extending between the resonance containers (5, 6), and at least one of the said tubes (11, 12) comprises at least one shut-off device.

8. A system according to Claim 5, **characterized in that** the sliding sleeves (30) of each resonance container (5, 6) are combined to form a structural unit (31) displaced by a setting member arranged on the resonance container (5, 6).

## Revendications

1. Système d'admission d'air d'un moteur à combustion interne à plusieurs cylindres, à deux lignes, les cylindres d'une ligne avec tubes d'admission étant raccordés à un récipient de résonanc , affecté à cette ligne, et avec au moins un tube de liaison entre les récipients de résonance, qui est r lié à une entrée d'air frais (13), caractérisé en ce que le système comporte des prolongements de tube d'admission (15) associés au tube d'admission (9) s'étendant par portions à l'intérieur des récipient de résonance (5, 6), lesquels prolongements sont raccordés à un récipient (14) commun, pourvu d'une utre entrée d'air frais (18).

2. Système selon la revendication 1, caractérisé en ce que la première et l'autre entrée l'air frais (18 et 13) sont placées conjointement dans un orifice d'entrée (21) du récipient (14).

3. Système selon la revendication 1 ou 2, caractérisé en ce qu'au moins un prolongement d tube d'admission (15) de chaque ligne de cylindres (1, 2) comporte un organe d'arrêt (19).

4. Système selon la revendication 1 ou 2, caractérisé en ce que les portions (16), situées à l'intérieur des récipients de résonance (5, 6) du pr longement de tube d'admission (15), sont cylindriques et alignées avec les cônes d'arrivée (10) des tubes 'admission (9) et sont disposées de manière à laisser un écartement (H).

5. Système selon la revendication 4, caractérisé en ce que des manchons coulissants (30) sont placés sur les portions (16), de manière à coulisser en franchissant au choix l'écartement (H).

6. Système selon la revendicatio 2, caractérisé en ce que le récipient (14), s'étendar dans la direction longitudinale (R) des lignes de cylindres (1, 2), est placé à peu près au milieu, entre les récipients de résonance (5, 6) et le tube de liaison (11), réalisé en plusieurs parties, est raccordé au écipient (14), qui présente à une extrémité l'orifice d'entrée (18).

7. Système selon la revendication 6, caractérisé en ce que parallèlement au premier tube de liaison (11) s'étend un deuxième tube de liaison (12), placé entre les récipients de résonance (5, 6) t l'un au moins de ces tubes (11, 12) comporte un orgar d'arrêt.

8. Système selon la revendication 5, caractérisé en ce que les manchons coulissants (30) de chaque récipient de résonance (5, 6) sont éunis en une unité de construction (31), qui est déplac e par un organe de réglage placé sur le récipient de résonance (5, 6).
